# EUROPEAN PATENT APPLICATION

(11) **EP 2 522 549 A1**
(43) Date of publication of application: **14.11.2012**
(21) Application number: 12166339.7
(22) Date of filing: 02.05.2012
(51) Int. Cl.: B60R 1/08, G02B 26/00

(54) **Transreflective vehicle mirror system**

(30) Priority: 12.05.2011 US 201113106247
(71) Applicant: Delphi Technologies, Inc., Troy, MI 48007 (US)
(72) Inventor: Kuhlman, Frederick F., Kokomo, IN 46902 (US); Sarma, Dwadasi H.R., Kokomo, IN 46902 (US)
(74) Representative: Denton, Michael John

(57) **Abstract**

A transreflective vehicle mirror system (30) configured to be attached to a vehicle (10). The system (30) includes an interior unit (34) and/or exterior unit (36), each of which includes various arrangements of a transreflective layer (54) optionally combined with a transparent display (72) layer and/or a variable tint layer (76). The units can be configured and operated in a variety of ways to provide the same and/or enhanced features/functions normally associated with conventional side view mirrors (12), rear view mirrors (14) (with or without an integrated information display), fold down visors (with or without a vanity mirror (68)), and graduated tinting commonly found on the upper portion of automobile windshields. The interior unit (34) and exterior unit (36) can operate to a transparent state so that a field of view or direction viewed by the operator (20) is not obstructed as is the case with conventional rear and side view mirrors, and fold-down sun-visors (16).

## Description

### TECHNICAL FIELD OF INVENTION

The invention generally relates to transreflective vehicle mirror system configured to be attached to a vehicle, and more particularly a system that variably combines a transreflective layer with a transparent display and a variable tint layer in various regions of the system.

### BACKGROUND OF INVENTION

The rear-view mirror, side-view mirrors, and sun visors create blind spots that block a vehicle operator's view of objects (e.g. - other vehicles, pedestrians) residing in the blind spots. For example, a rear view mirror and/or passenger sun-visor may block a view of another vehicle approaching from the front-right quadrant the vehicle, especially if the other vehicle is approaching from an elevated position. Another example is where a side-view mirror obstructs a view of a small child or other relatively short obstruction (e.g. a parked tricycle) positioned in a line of site obstructed by the side-view mirror.

### SUMMARY OF THE INVENTION

In accordance with a first embodiment of this invention, a transreflective vehicle mirror system is provided. The system is configured to be attached to a vehicle, and define a viewing surface. The system includes a transreflective layer operable to a variable reflective state. The variable reflective state includes a full-reflective-state where most light impinging on the transreflective layer is reflected. The variable reflective state also includes a partial-reflective-state where a portion of light impinging on the transreflective layer is reflected. The variable reflective state further includes a transparent-state where most light impinging on the transreflective layer passes through the transreflective layer.

In another embodiment of the present invention, the first embodiment further includes a transparent display for displaying an image. The transparent display is arranged proximate to the viewing surface.

In another embodiment of the present invention, the first embodiment further includes a variable tint layer for tinting ambient light. The variable tint layer is arranged proximate to the viewing surface.

In another embodiment of the present invention, the first embodiment further includes a transparent display for displaying an image, and a variable tint layer for tinting ambient light. The transparent display and variable tint are layer arranged proximate to the viewing surface.

Further features and advantages of the invention will appear more clearly on a reading of the following detailed description of the preferred embodiment of the invention, which is given by way of non-limiting example only and with reference to the accompanying drawings.

### BRIEF DESCRIPTION OF DRAWINGS

The present invention will now be described, by way of example with reference to the accompanying drawings, in which:

Fig. 1 is a side view of a vehicle equipped with conventional side and rear view mirrors and sun visors;

Fig. 2 is a side view of a vehicle equipped with a transreflective vehicle mirror system in accordance with one embodiment;

Fig. 3 is a perspective interior view of a vehicle equipped with the transreflective vehicle mirror system of Fig. 2 in accordance with one embodiment; and

Fig. 4 is a sectional side view of layers forming part of the transreflective vehicle mirror system of Fig. 2 in accordance with one embodiment.

### DESCRIPTION OF THE PREFERRED EMBODIMENTS

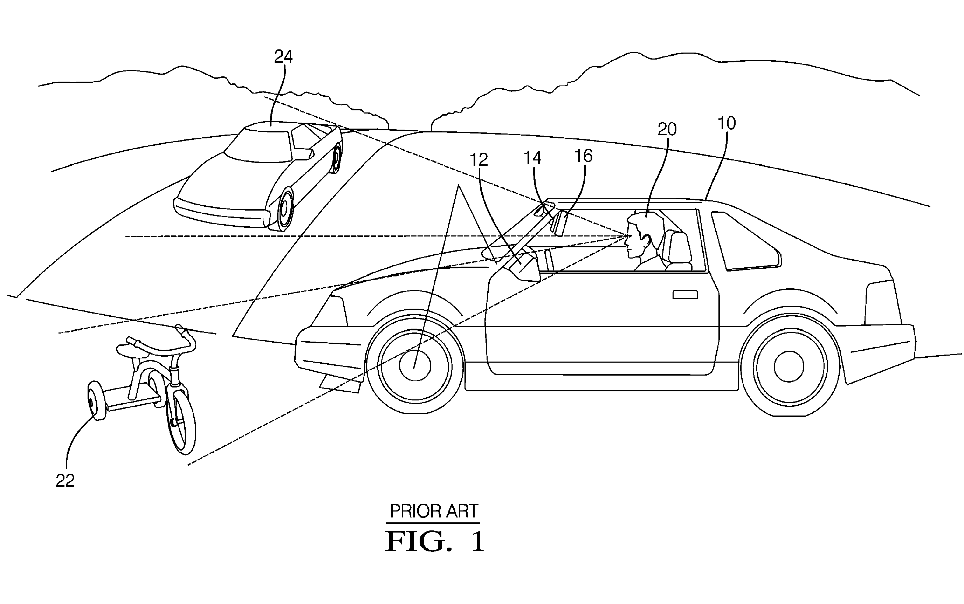

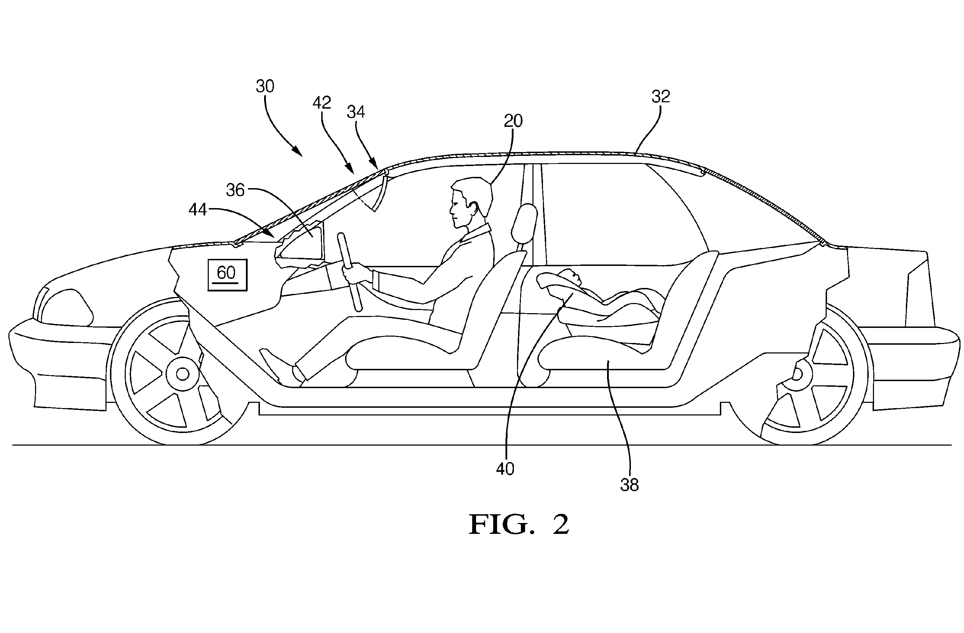

Fig. 1 illustrates a vehicle 10 equipped with a conventional side view mirror 12, a conventional rear view mirror 14, a conventional fold-down sun-visor 16. It has been observed that an operator 20 may not have an unobstructed view of a tricycle 22 positioned as illustrated, or another vehicle 24 positioned as illustrated, because of the location and optically opaque nature of the side-view mirror 12, the rear-view mirror 14, and the sun-visor 16. It is in view of this problem that a transreflective mirror system 30 (Fig. 2) is set forth below.

Fig. 2 illustrates a vehicle 32 equipped with a non-limiting example of a transreflective vehicle mirror system 30 configured to be attached to the vehicle 32. The system may include an interior unit 34 that is generally intended to provide some or all interior related features/functions typically provided by the rear view mirror 14, and/or the sun-visor 16, and/or partial/graduated window tinting commonly applied to the upper portion of a vehicle windshield. The interior related features/functions may include, but are not limited to, providing to an operator 20 a rearward view of an area behind the vehicle 32 and/or a rear seat view of a backseat 38 in the vehicle 32, for example a rear view mirror for backing the vehicle 32, or a mirror oriented to provide a view of an infant 40 secured in a child seat attached to the backseat 38; a blind-spot mirror for viewing the area beside the vehicle 32 commonly called the blind-spot. The interior related features/functions may also include, but are not limited to, a display for displaying vehicle information such as a compass bearing, exterior temperature, an indication that an object proximate to the vehicle 32 has been detected, an image from a camera viewing an area about the vehicle 32, or navigation information; windshield tinting for shading the operator 20 when the sun is shining, especially when the sun is at a relatively high angle (e.g. mid-day); a sun-visor for shielding the operator's eyes, especially when the sun is at a relatively low angle (e.g. dawn, dusk). The system 30 may also include an exterior unit 36 that is generally intended to provide some or all exterior related features/functions typically provided by the side view mirror 12. The exterior related features/functions may include, but are not limited to, providing to an operator 20 a rearward view of an area beside the vehicle 32; a display for displaying vehicle information such as an indication that the vehicle turn signal has been activated, or an indication that an object has been detected proximate to the vehicle 32.

As will be explained in more detail below, the interior unit 34 and the exterior unit are configured to be operable to a state where the interior unit 34 and the exterior unit are generally transparent so that the operator 20 can see through the interior unit 34 and the exterior unit in order to detect objects (e.g. tricycle 22, another vehicle 24) normally obstructed by the conventional mirrors and visors illustrated in Fig. 1. The system 30 may include an interior attachment device 42 configured to attach the interior unit 34 to the vehicle 32, and/or an exterior attachment device 44 configured to attach the exterior unit 36 to the vehicle 32. The interior attachment device 42 and the exterior attachment device 44 may include a bracket, brace, or other such mechanical part known to those skilled in the art that is suitable for attaching the interior unit 34 and the exterior unit 36 to the vehicle 32. In order to prevent obstructing the view of the operator 20, it may be preferable that the interior attachment device 42 and the exterior attachment device 44 are formed of material that is substantially transparent, for example a clear polymer such as polycarbonate.

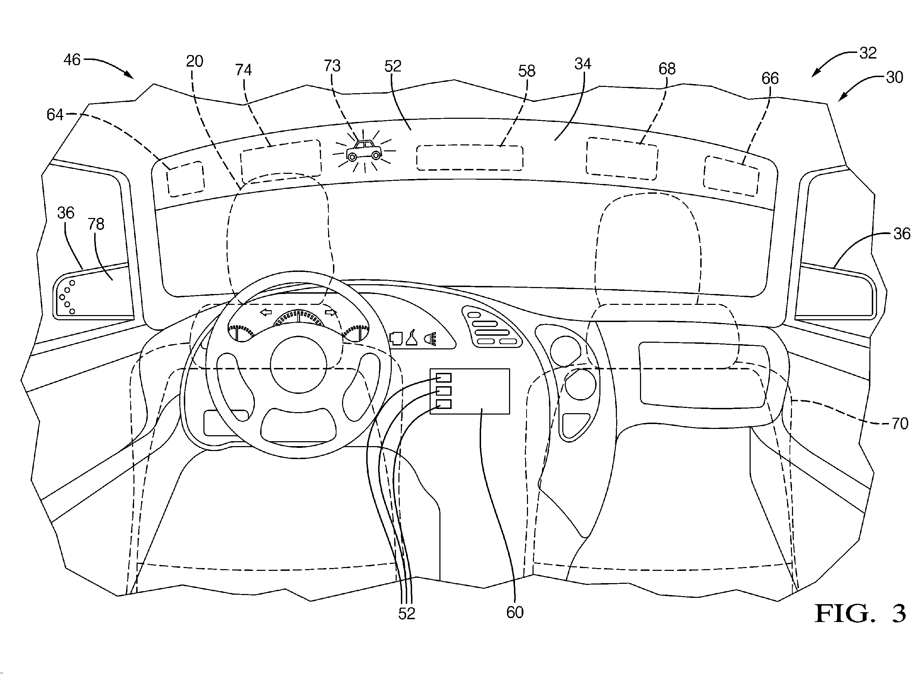

Fig. 3 illustrates a non-limiting example of the system 30 installed in the vehicle 32 that includes non-limiting examples of the interior unit 34 and the exterior unit 36. In this example, the interior unit 34 is illustrated as spanning the entire width of the windshield area, but it will be appreciated that the interior features/functions described above may be provided by a plurality of distinct interior units having various combinations of the layers described below.

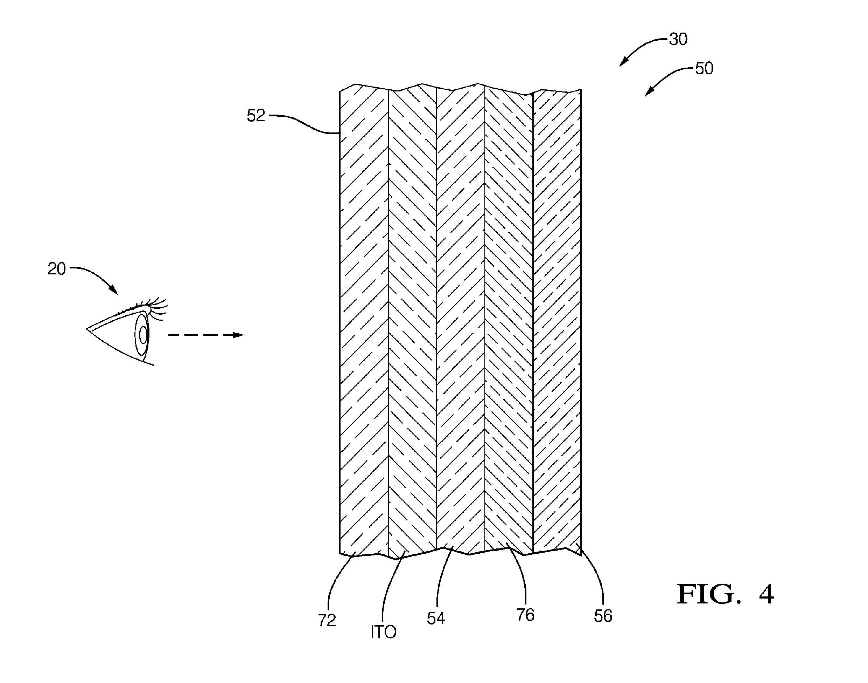

Fig. 4 illustrates a non-limiting example of an arrangement 50 of layers useful to provide the features/functions of the interior unit 34 and/or the exterior unit 36 in order to provide the interior and/or exterior features/functions described above. In general, the arrangement 50 defines a viewing surface 52 that is normally oriented toward the operator 20. The arrangement 50 may include a transreflective layer 54 generally operable to a variable reflective state. The variable reflective state may include a full-reflective-state where most, or all, of the light impinging on the transreflective layer 54 is reflected, a partial-reflective-state where a some of the light impinging on the transreflective layer 54 is reflected and some passes through the transreflective layer 54, and a transparent-state where most, or all, of the light impinging on the transreflective layer 54 passes through the transreflective layer 54.

The arrangement 50 may include electrical conductor layers such as an indium-tin-oxide (ITO) layer for distributing electric signals about the arrangement 50, for example to conduct an electrical signal to the transreflective layer 54. All of the layers necessary to form functional arrangement are not specifically illustrated only for the purpose of simplifying the illustration, but it will be recognized by the skilled practitioner what additional layers may be necessary to form the arrangement 50. The arrangement 50 may include a clear substrate layer 56 to provide structural base when one or more combinations of the various layers illustrated is selectively provided to a select region of the interior unit 34 and/or the exterior unit 36. The clear substrate layer 56 is illustrated in Fig. 4 as underlying the transreflective layer 54 opposite the viewing surface 52. However, as this illustration is non-limiting, the clear substrate layer 56 may be placed between any of the layers shown, or placed on the opposite side of the arrangement and so would define the viewing surface 52. The clear substrate layer 56 may be formed of glass or a clear polymer such as polycarbonate.

Referring back to Fig. 3, the entire area of the interior unit 34 may include the transreflective layer 54 and so the entire interior unit may 34 may be operated to appear mirror like. Alternatively, only select regions of the interior unit 34 may include the transreflective layer 54 and so only these select regions may appear to be a mirror. As a non-limiting example, the transreflective layer 54 may be selectively provided to define a rear-view mirror region 58 located where a conventional rear-view mirror 14 would typically be located. The size of the rear-view mirror region 58 may be larger than normally associated with conventional rear-view mirrors, and the system 30 may be configured to control or operate a portion of the rear-view mirror region 58 to the full-reflective-state and the remainder to the transparent-state so the size and position of the resulting mirror can be optimized for the operator 20. The portion controlled to the full-reflective state may, for example, be selected based on input from the operator 20, or may be selected based on a transmission gear selected.

For example, if a reverse travel gear is selected, the entire rear-view mirror region 58 may be operated to the full-reflective-state to maximize the area behind the vehicle 32 viewable by the operator 20. Alternatively, if a forward travel gear is selected, a portion less than the entire rear-view mirror region 58 may be operated to the full-reflective state, or the portion may be operated to the partial-reflective-state if the vehicle is being operated at night and other following vehicle headlights are detected, or if there is an indication that the vehicle 32 is preparing to make a right turn, for example based on the vehicle's right-hand turn signal being activated.

It is emphasized that the ability to operate the rear-view mirror region 58 to the transparent state, possibly in conjunction with the clear substrate layer 56 for providing structural support, particularly if the transreflective layer 54 does not span the entire area of the interior unit 34, provides for the entire interior unit 34, when desired, to appear substantially transparent and so not obstruct the view of the operator 20.

Another example of where it may be desirable to have selected areas of the interior unit 34 appear to be a mirror include a left blind spot mirror region 64 and a right blind spot mirror region 66 positioned to allow the operator a view area commonly called blind spots on either side of the vehicle 32. Another example is a vanity mirror region 68 that may be useful to a passenger 70 for farding.

In the examples described above, the transreflective layer 54 is described as having three states of reflectivity. However, it will be recognized that the transreflective layer 54 may be continuously variable between the full-reflective-state and the transparent-state, as will become apparent in the following description. The transreflective layer 54 may be formed by an array of transreflective pixels (not shown). Techniques for independently controlling each of the transreflective pixels are known. Each of the transreflective pixels may be independently operable to a distinct variable reflective state. If the technology used to form the transreflective pixels is one that is only operable to a full-reflective-state or a transparent-state, then by controlling an interlaced portion of the pixels to the full-reflective-state and the remaining pixels to the transparent-state, the apparent degree of reflectivity exhibited by the transreflective layer 54 can appear to be continuously variable between the full-reflective-state and the transparent-state. Alternatively, if the technology used to form the transreflective pixels is one where each pixel is continuously variable between the full-reflective-state and the transparent-state, then the transreflective layer 54 as a whole can be continuously variable between the full-reflective-state and the transparent-state. An example technology that enables the transreflective layer 54 to be continuously variable between the full-reflective-state and the transparent-state is electrowetting. As such, the transreflective layer 54 may include an electrowetting layer that, for example, may include Galinstan as the reflective feature in the transreflective layer 54.

Referring again to Figs. 2 and 3, the system 30 may include a controller 60 configured to determine the variable reflective state of the transreflective layer 54 based on a vehicle status of the vehicle 32. As used herein, vehicle status may be based on any one of, or any combination of, but not limited to: operator input, vehicle interior light, exterior ambient light (e.g. sunlight), selected transmission gear, vehicle brake activation, vehicle speed, detected object proximity status, and other vehicle headlight status. For example, the system 30 may include push buttons 62 configured to allow the operator 20 to convey an operator input to the controller 60, for example to activate the vanity mirror 68. The system 30 may also be equipped with light sensors so the controller 60 can make a determination based on vehicle interior light and/or exterior ambient light and/or light emitted by other approaching vehicles. The controller may also be configured to receive signals from other systems on the vehicle 32 to determine the control or operation states of various layers in the arrangement 50.

The controller 60 may include a processor such as a microprocessor or other control circuitry as should be evident to those in the art. The controller 60 may include memory, including non-volatile memory, such as electrically erasable programmable read-only memory (EEPROM) for storing one or more routines, thresholds and captured data. The one or more routines may be executed by the processor to perform steps for determining if signals received by the controller 60 for operating the interior unit 34 and/or the exterior unit 36, as described herein.

Referring again to Fig. 4, the arrangement 50 may include, as part of the interior unit 34, a layer designated as a transparent display 72 for displaying an image. The transparent display 72 is generally arranged proximate to the viewing surface 52, preferably so the layers forming the arrangement do not appear to be obvious separate layers. For this example, and others described herein, it is preferable for the various layers to be in close enough proximity to each other (i.e. - proximate) so the arrangement 50 appears to be a unified part. In the non-limiting example shown in Fig. 4 the transparent display 72 is shown overlying the transreflective layer 54 and adjacent the viewing surface 52. The transparent display 72 may include one or more organic light emitting diodes (OLEDs). The OLEDs may be arranged in an array of pixels to form a reconfigurable display capable of displaying a variety of images, for example navigation information. Alternatively, the OLEDs may be arranged in a pattern that when activated together emit a pattern of light to display an icon or symbol, for example indicating that another vehicle has been detected in an area beside the vehicle 32 by illuminating a vehicle detected symbol 73 on the viewing surface 52.

Referring back to Fig. 3, the entire area of the interior unit 34 may include the transparent display 72 and so the entire interior unit may 34 may appear to be a display. Alternatively, only select regions of the interior unit 34 may include the transparent display 72 and so only these select regions may appear to be a display. As a non-limiting example, the transparent display 72 may be selectively provided to define a navigational display region 74 located in front of the operator 20.

During low ambient light conditions, the navigational display region 74 may emit sufficient light to be readily seen by the operator 20, even if the rest of the interior unit 34 is operating in a transparent state. However, if the ambient light level is relatively high such as during a sunny day, it may be preferable for the transparent display 72 to overlay a region of transreflective layer 54, possibly sized to correspond to the navigational display region 74. Then, if the ambient light is bright, the transreflective layer 54 may be operated to a full-reflective state in order to reflect ambient light impinging on the interior unit 34 from a direction opposite the viewing surface 52, and reflect light emitted by the transparent display 72 in a direction away from the operator 20 back toward the operator 20 in order to combine with and so supplement light originally emitted by the transparent display 72 toward the operator 20.

Referring again to Fig. 4, as part of the interior unit 34 the arrangement 50 may include a variable tint layer 76 for tinting ambient light. The description in the following few paragraphs is directed to an arrangement 50 that does not include the transparent display 72 described above. After these few paragraphs, a further description of an arrangement 50 that includes both the transparent display 72 and the variable tint layer 76 in combination with the transreflective layer 54 is provided. The variable tint layer 76 is generally arranged proximate to the viewing surface 52. In the non-limiting example shown in Fig. 4 the variable tint layer 76 is shown underlying the transreflective layer 54 opposite the viewing surface 52, however as will become evident in the discussion below, there may be advantages to having the variable tint layer 76 between the transreflective layer 54 and the viewing surface 52.

The variable tint layer 76 is generally operable to a tinting state. The tinting state includes an opaque-state where most, or all, of the light impinging on the variable tint layer 76 is blocked from passing through the variably tint layer 76. The tinting state also includes a tinted-state where a portion of light impinging on the variable tint layer is blocked from passing through the variable tint layer, and most or all of the non-blocked light passes through the variable tint layer 76. The tinting state also includes a clear-state where most, or all, light impinging on the variable tint layer passes through the variable tint layer 76.

The variable tint layer 76 may be formed by one or more organic liquid crystal display (LCD) elements, or be an electrowetting layer comprising an opaque or black electrowetting fluid. The variable tint layer 76 may be an array of pixels, or shaped regions to form a variable tint layer that can variable block or tint ambient light in different regions of the viewing surface 52 to varying degrees according to the tinting state. By using small enough pixels, the variable tint layer 76 may be operated to appear to be a smoothly varying tinting gradient across the interior unit 34.

The arrangement show in Fig. 4 illustrates that the variable tint layer 76 is on the side of the interior unit 34 oriented toward outside the vehicle 32, and the transreflective layer is orientated towards the viewing surface 52. This configuration is advantageous when various regions of the transreflective layer 54 are operated to a reflective state, because the reflective layer may be hidden from view by persons outside the vehicle 32, and so the vehicle 32 may appear more attractive because outside observers are not seeing the mirrors formed by the transreflective layer 54. In another embodiment, the variable tint layer 76 may be positioned toward the viewing surface 52 relative to the transreflective layer 54. An advantage of this arrangement is that when the transreflective layer 54 is controlled to a full-reflective state, sun-light, especially infrared light, may be reflected and so reduce the sun-load on the vehicle's air-conditioning system. In such a configuration it may be preferable for the transreflective layer to be provided over the entire are of the interior unit 34 so the appearance of the interior unit 34 from outside the vehicle appears to be uniform and so that a maximum amount of sunlight may be reflected.

An arrangement 50 that includes both the transparent display 72 and the variable tint layer 76 in combination with the transreflective layer 54 is now described. As suggested in Fig 4, the arrangement 50 may include a transparent display 72 for displaying an image, and a variable tint layer 76 for tinting ambient light, wherein the transparent display 72 and variable tint layer 76 arranged proximate to the viewing surface 52 as part of the interior unit 34. By providing all three layers, some advantageous features can be provided. For example, if the transparent display 72 in the navigation display region 74 is being operated, the transreflective layer 54 and the variable tint layer 76 may be operated on an individual pixel to enhance the image displayed. For example, if a particular OLED in the transparent display is off, the corresponding area of the variable tint layer 76 may be operated to the opaque-state so that the image displayed appears to have a black background, and so provide better image contrast. However, if a particular OLED is on, the transreflective layer can be activated to reflect and so brighten the image as described above. Other advantages, particularly in view of the descriptions above directed to the various regions, will be apparent to those skilled in the art.

Accordingly, the controller 60 may be configured to determine any one of, or any combination of, the variable reflective state, the image, and the tinting state, based on a vehicle status of the vehicle. This may include controlling different regions on the viewing surface 52 to exhibit different features/functions. For example, the rear view mirror region may alternate between a semitransparent mirror appearance by operating the transreflective layer 54 to the partial-reflective-state when the vehicle is traveling forward, to displaying an image from a rear view camera when a reverse transmission gear is selected.

In view of the description above directed toward the interior unit 34, it will be appreciated that the arrangement 50 may be used as part of the exterior unit 36 to vary the appearance of an exterior viewing surface 78. For example the transreflective layer 54 of the exterior unit 36 may be operated to the full-reflective-state so the exterior unit 36 appears to be a mirror. Then, if a turn signal is activated, a portion of the external viewing surface 78 may be illuminated by the transparent display 72 in a shape that indicates that the turn signal has been activated. Also, the exterior viewing surface may be operated to display an image from a camera showing a field of view wider than available from a relatively flat side view mirror.

Accordingly, a transreflective vehicle mirror system 30 is provided. The interior unit 34 and exterior unit 36 can operated to a transparent state so that a field of view or direction viewed by the operator 20 is at least not completely obstructed. The interior unit 34 can be configured and operated in a variety of ways to provide the same and/or enhanced features/functions normally associated with conventional side view mirrors 12, rear view mirrors 14 (with or without an integrated information display), fold down sun-visors 16 (with or without a vanity mirror), and graduated tinting commonly found on the upper portion of automobile windshields. Similarly, the exterior unit 36 can be operated to a transparent mode.

## Claims

1. A transreflective vehicle mirror system (30) configured to be attached to a vehicle (10), and define a viewing surface (52), said system (30) comprising:
a transreflective layer (54) operable to a variable reflective state, wherein the variable reflective state includes a full-reflective-state where most light impinging on the transreflective layer (54) is reflected, a partial-reflective-state where a portion of light impinging on the transreflective layer (54) is reflected, and a transparent-state where most light impinging on the transreflective layer (54) passes through the transreflective layer (54).

2. The system (30) in accordance with claim 1, wherein the transreflective layer (54) is continuously variable between the full-reflective-state and the transparent-state.

3. The system (30) in accordance with claim 1, wherein the transreflective layer (54) comprises an array of transreflective pixels, wherein each of the transreflective pixels is independently operable to a variable reflective state.

4. The system (30) in accordance with claim 1, wherein the transreflective layer (54) includes an electrowetting layer.

5. The system (30) in accordance with claim 4, wherein the electrowetting layer comprises Galinstan.

6. The system (30) in accordance with claim 1, wherein the system (30) further comprises a controller (60) configured to determine the variable reflective state based on a vehicle (10) status of the vehicle (10).

7. The system (30) in accordance with claim 6, wherein the vehicle (10) status is based on at least one of: operator (20) input, vehicle (10) interior light, ambient light, selected transmission gear, vehicle (10) brake activation, vehicle (10) speed, detected object proximity status, and other vehicle (10) headlight status.

8. The system (30) in accordance with claim 1, wherein the system (30) further comprises a transparent display (72) for displaying an image, said transparent display (72) arranged proximate to the viewing surface (52).

9. The system (30) in accordance with claim 8, wherein the transparent display (72) overlies the transreflective layer (54) adjacent the viewing surface (52).

10. The system (30) in accordance with claim 8, wherein the transparent display (72) comprises an organic light emitting diode.

11. The system (30) in accordance with claim 8, wherein the system (30) further comprises a controller (60) configured to determine the variable reflective state and the image, based on a vehicle (10) status of the vehicle (10).

12. The system (30) in accordance with claim 1, wherein the system (30) further comprises a variable tint layer (76) for tinting ambient light, said variable tint layer (76) arranged proximate to the viewing surface (52).

13. The system (30) in accordance with claim 12, wherein the variable tint layer (76) underlies the transreflective layer (54) opposite the viewing surface (52).

14. The system (30) in accordance with claim 12, wherein the variable tint layer (76) is operable to a tinting state, wherein the tinting state includes an opaque-state where most light impinging on the variable tint layer (76) is blocked from passing through the variable tint layer (76), a tinted-state where a portion of light impinging on the variable tint layer (76) is blocked from passing through the variable tint layer (76), and a clear-state where most light impinging on the variable tint layer (76) passes through the variable tint layer (76), wherein the system (30) further comprises a controller (60) configured to determine the variable reflective state and the tinting state, based on a vehicle (10) status of the vehicle (10).

15. The system (30) in accordance with claim 14, wherein the variable tint layer (76) includes an electrowetting type layer.
